# FASCICULE DE BREVET EUROPEEN

(11) **EP 1 577 609 B1**
(45) Date de publication et mention de la délivrance du brevet: **24.08.2011**
(21) Numéro de dépôt: 05290553.6
(22) Date de dépôt: 11.03.2005
(51) Int. Cl.: F21V 9/10, F21V 3/04, G02B 6/00

(54) **Projecteur pour véhicule automobile avec dispositif de signalisation comprenant un revêtement fluorescent**
Fahrzeugscheinwerfer mit Signaleinrichtung mit einer Leuchtstoffbeschichtung
Vehicle headlamp with signalling device comprising a fluorescent coating

(30) Priorité: 16.03.2004 FR 0402726
(43) Date de publication de la demande: 21.09.2005
(73) Titulaire: VALEO VISION, 93012 Bobigny Cedex (FR)
(72) Inventeur: Leleve, Joël, 93800 Epinay sur Seinée (FR); Albou, Pierre, 75013 Paris (FR)

(56) Documents cités:
- EP-A- 0 921 515
- US-A- 4 215 390
- US-A- 5 709 453
- US-A1- 2004 095 779

## Description

L'invention concerne un projecteur de véhicule automobile pourvu d'un dispositif de signalisation. Le document US 5709453 présente les caractéristiques du préambule de la revendication 1.

Il est connu du document de brevet EP 1 359 369 de réaliser un dispositif de signalisation comportant une source lumineuse, de préférence une diode électroluminescente, et un guide de lumière comportant une surface d'entrée de lumière pour la lumière transmise par cette source et une surface de sortie de lumière. Avantageusement, les sources lumineuses sont disposées sur un bord du guide de lumière. Le guide de lumière est imprimé de zones dispersives formées d'une matrice colorée imprimable et de particules dispersives incluses dans cette matrice. Les particules dispersives incluses peuvent comprendre de l'oxyde de titane.

Un tel agencement nécessite un montage relativement précis afin de disposer correctement les diodes vis-à-vis du guide de lumière.

Par ailleurs, un nombre relativement important de diodes électroluminescentes est nécessaire, ce qui complique le montage et est coûteux. Cette ligne de diodes crée par ailleurs une ligne de lumière visible de l'extérieur du véhicule.

Enfin, le guide de lumière doit être réalisé en matériau spécifique et est susceptible d'effets optiques non souhaités, de type prismes.

Pour résoudre ces problèmes, l'invention propose un projecteur selon la revendication 1.

Selon un premier mode de réalisation, la source lumineuse émet un rayonnement en dehors du domaine visible, notamment dans l'ultraviolet, de préférence dans le proche ultraviolet. Et la ou les zones actives convertissent, présentant avantageusement une propriété de fluorescence, ce rayonnement non visible en un rayonnement dans le visible. Dans ce cas, il n'est pas nécessaire de « cacher » le rayonnement de la source de façon à ce qu'on ne le voit pas, une fois le dispositif de l'invention monté dans un véhicule, puisque ce rayonnement est invisible à l'oeil.

Selon un second mode de réalisation, la source lumineuse émet dans la gamme des bleus ou des bleus verts, et les zones actives sont aptes à convertir cette lumière en lumière de longueur d'onde voulue, dans le blanc généralement. Il peut s'agir, notamment de revêtements fluorescents comportant du nitrure de gallium. Dans ce cas là, il est alors généralement nécessaire de prévoir une configuration telle de la source qu'elle soit dissimulée, une fois le dispositif monté dans le véhicule.

Généralement, on cherche à ce que la couleur de la lumière convertie par les zones actives soit blanche.

Grâce à l'invention, la seule contrainte est que la source de lumière éclaire ladite pièce. Elle peut donc être disposée à proximité de ladite pièce support de façon très libre et peut être aisément logée à un emplacement non visible de l'extérieur du véhicule automobile.

Par ailleurs, ladite source ne doit, de préférence, éclairer que lesdites zones actives pour assurer la fonction de signalisation. L'invention permet donc de limiter les pertes d'énergie.

Selon un mode de réalisation préféré, ladite source est une source de lumière UV et lesdites zones sont des zones fluorescentes. Un exemple de source de lumière UV appropriée est une diode ou une pluralité de diodes émettant principalement ou essentiellement des rayons ultra-violets. Mais d'autres types de diodes peuvent être utilisées, notamment des diodes électroluminescentes émettant noon seulement dans l'ultra-violet mais aussi dans d'autres longueurs d'onde comme dans le visible.

On peut donc utiliser toutes sources de lumière émettant dans l'UV et d'autres longueurs d'onde, et n'exploiter pour l'invention que le rayonnement UV émis.

L'avantage d'utiliser des zones fluorescentes, plutôt qu'une autre zone luminophore, est d'obtenir un effet d'éclairage spontané sans rémanence.

Selon l'invention, lesdites zones comportent un revêtement constitué d'un vernis ou d'une peinture et disposé sur une partie de la surface de ladite pièce. On peut déposer le revêtement, notamment, en le fabriquant in situ par enduction, spray, ou en fixant à la pièce un revêtement préfabriqué, par encollage par exemple. Le dépôt peut recouvrir une surface continue ou discontinue.

De préférence, lesdites zones sont sous forme de motifs.

Grâce à l'invention, il est possible de donner la forme voulue à ces motifs, ce qui permet des effets innovants.

Ladite pièce support peut être un guide de lumière comportant une surface d'entrée de lumière pour la lumière transmise par ladite source et une surface de sortie de lumière.

L'invention concerne également un projecteur de véhicule automobile pourvu d'un dispositif de signalisation comme précisé ci-dessus.

Ladite pièce peut être solidaire du réflecteur et/ou faire partie du masque du projecteur ou d'une paroi du boîtier dudit projecteur, ou tout autre élément faisant partie du projecteur ou qui est ajouté au projecteur pour mettre en oeuvre l'invention.

Soit on ajoute une ou plusieurs pièces au projecteur, que l'on fonctionnalise avec une ou plusieurs zones « actives » au sens de l'invention, notamment fluorescentes, soit la pièce fait déjà partie intégrante du projecteur (masque, guide de lumière, zone neutre d'un réflecteur ...), et on lui confère une seconde fonctionnalité avec l'adjonction de zones actives au sens de l'invention.

Ledit dispositif de signalisation peut faire partie d'un dispositif d'éclairage du projecteur.

Le dispositif conforme à l'invention peut en effet être un complément d'émission de lumière associé à un dispositif d'éclairage, par exemple un code.

L'invention est décrite ci-après plus en détail à l'aide de figures représentant des modes de réalisation préférés de l'invention.

La figure 1 est une vue en coupe verticale schématique d'un projecteur de véhicule automobile pourvu d'un dispositif de signalisation conforme à l'invention.

La figure 2 est une vue en coupe verticale schématique d'un dispositif de signalisation selon une variante conforme à l'invention.

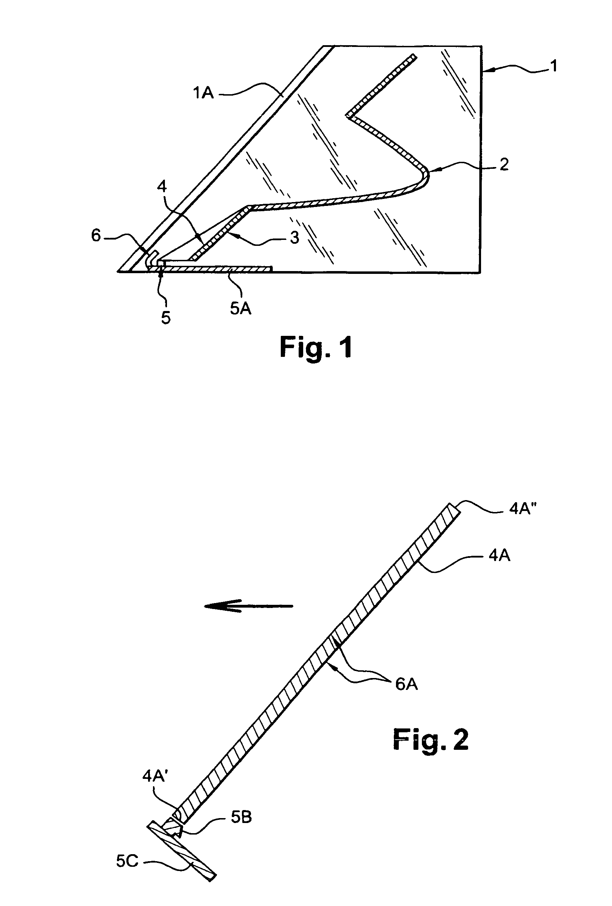

Sur la figure 1, est représenté schématiquement un projecteur de véhicule automobile. Ce projecteur comporte dans un boîtier 1 fermé par une glace 1A, un réflecteur 2. Une pièce 3 est solidaire du réflecteur 2 et est recouverte sur sa surface 4 d'une peinture fluorescente ou d'un vernis fluorescent.

Une source de lumière UV, plus précisément une diode UV 5 pourvue d'un circuit de commande 5A est également disposée dans le boîtier et est cachée de la vue de l'extérieur du véhicule automobile par une garniture 6. Sur la figure est représenté le faisceau lumineux émis par la diode 5.

Lors de la commande de la diode 5, celle-ci éclaire la surface 4 de la plaque support 3. La longueur d'onde UV y est transformée en longueur d'onde visible de lumière blanche. Il apparaît alors au travers de la glace 1A, une zone de lumière blanche visible formant un dispositif de signalisation de type feu de position.

Selon une variante de réalisation du dispositif de signalisation représenté sur la figure 2, la pièce 4A est une lame transparente formant guide de lumière et la diode UV 5B avec son circuit de commande 5C associée est disposée de façon à transmettre de la lumière d'une face d'entrée 4A' à une surface de sortie 4A ". Ces deux surfaces sont deux bords opposés de la plaque 4A. Sur au moins une des faces 6 de la plaque sont réalisées des zones actives optiquement, par application d'une peinture fluorescente transparente ou d'un vernis fluorescent transparent, qui émettent une lumière blanche lors de la mise en fonction de la diode 5B.

Selon les exemples précédemment décrits, la source est une source de lumière UV et les zones actives optiquement sont des zones fluorescentes.

Cependant, l'invention s'applique à toute source de lumière à une première longueur d'onde associée à des zones transformant cette lumière à première longueur d'onde en lumière de seconde longueur d'onde visible, notamment dans le blanc.

A titre d'exemple, il peut également être utilisé une source de lumière bleue associée à des zones de matériau luminophore à base de phosphore.

La pièce support peut être revêtue partiellement de peinture fluorescente selon des zones actives optiquement formant des motifs variés (picturaux, graphiques).On peut utiliser des zones actives reprenant les contours d'un logo, une marque par exemple.

Le dispositif de signalisation conformément à l'invention peut être utilisé pour former un feu de signalisation, par exemple un feu de position, comme précédemment.

Il peut également être utilisé pour la visualisation d'une information verbale ou picturale.

Il peut également faire partie d'un dispositif d'éclairage du projecteur, venant en complément d'un éclairage de type code. Par exemple, la pièce support peut être transparente dans ce cas et être placée devant le dispositif d'éclairage. Lors de l'émission de lumière par la source selon l'invention, une zone active émet de la lumière visible, renforçant ou complétant la lumière émise par le dispositif d'éclairage, notamment un faisceau lumineux de type code, code virage fixe ou dynamique (« Dynamic Bending Light » et « Fixed Bending Light » en anglais), ou encore un faisceau lumineux de ville, du type Day Running Light ou DRL en anglais.

## Revendications

1. Projecteur de véhicule automobile pourvu d'un dispositif de signalisation, ledit dispositif de signalisation comportant au moins une source lumineuse (5) et au moins une pièce (3) support de zone(s) active(s) optiquement destinée(s) à être éclairée(s) par ladite source de lumière, ladite source (5) étant une source de lumière à une première longueur d'onde ou première gamme de longueurs d'onde,
lesdites zones actives étant des zones convertissant au moins une partie de cette lumière à première longueur d'onde ou gamme de longueur d'ondes en lumière de seconde longueur d'onde ou gamme de longueur d'ondes dans le domaine du visible, **caractérisé en ce que** les zones actives comportent un revêtement fluorescent constitué d'un vernis ou d'une peinture et disposé sur une partie de la surface de ladite pièce de support, ledites zones actives conférant ainsi à ladite pièce support (3) une seconde fonctionnalité.

2. Projecteur selon la revendication 1, **caractérisé en ce que** ladite source (5) est une source de lumière UV ou une source de lumière dans la gamme des bleus ou bleu-vert, et lesdites zones sont des zones fluorescentes.

3. Projecteur selon l'une des revendications précédentes, **caractérisé en ce que** ladite source (5) est une diode ou une pluralité de diodes émettant principalement des rayons UV.

4. Projecteur selon la revendication l'une des revendications, **caractérisé en ce que** lesdites zones sont sous forme de motifs, notamment picturaux ou graphiques.

5. Projecteur selon l'une des revendications précédentes, **caractérisé en ce que** ladite pièce support (4A) est un guide de lumière comportant une surface d'entrée (4A') de lumière pour la lumière transmise par ladite source et une surface de sortie (4A") de lumière.

6. Projecteur selon l'une quelconque des revendications précédentes, comportant un réflecteur (2) et optionnellement un masque, **caractérisé en ce que** ladite pièce support (3) est solidaire du réflecteur et/ou fait partie du masque dudit projecteur.

7. Projecteur selon l'une quelconque des revendications précédentes, **caractérisé en ce que** ledit dispositif de signalisation fait partie d'un module d'éclairage du projecteur.

8. Projecteur selon l'une quelconque des revendications précédentes, **caractérisé en ce que** la seconde fonctionnalité est de type feu de position.

9. Véhicule équipé d'au moins un projecteur selon l'une des revendications précédentes.

## Claims

1. Motor vehicle headlight provided with a signalling device, the said signalling device comprising at least one source of light (5) and at least one support part (3) for an optically active area or areas which is/are designed to be lit by the said source of light, the said source (5) being a source of light with a first wavelength or first range of wavelengths, the said active areas being areas which convert at least part of this light with a first wavelength or range of wavelengths into light with a second wavelength or range of wavelengths in the visible spectrum, **characterised in that that** active areas comprise a fluorescent coating which is constituted by a varnish or paint, and is disposed on a part of the surface of the said support part, the said active areas thus providing the said support part (3) with a second functionality.

2. Headlight according to claim 1, **characterised in that** the said source (5) is a source of UV light, or a source of light in the range of the blues or blue-greens, and the said areas are fluorescent areas.

3. Headlight according to one of the preceding claims, **characterised in that** the said source (5) is a diode or a plurality of diodes which mainly emit UV rays.

4. Headlight according to one of the claims¹, **characterised in that that** said areas are in the form of patterns, which in particular are pictorial or graphic.

5. Headlight according to one of the preceding claims, **characterised in that that** said support part (4A) is a light guide comprising a light intake surface (4A') for the light which is transmitted by the said source, and a light output surface (4A").

6. Headlight according to any one of the preceding claims, comprising a reflector (2) and optionally a shield, **characterised in that** the said support part (3) is integral with the reflector and/or forms part of the shield of the said headlight.

7. Headlight according to any one of the preceding claims, **characterised in that** the said signalling device² forms part of a lighting module of the headlight.

8. Headlight according to any one of the preceding claims, **characterised in that that** the second functionality is of the position light type.

9. Vehicle equipped with at least one headlight according to one of the preceding claims.

## Patentansprüche

1. Kraftfahrzeugscheinwerfer, versehen mit einer Signalgebungsvorrichtung, wobei die Signalgebungsvorrichtung wenigstens eine Lichtquelle (5) und wenigstens ein Trägerteil (3) mit optisch aktivem Bereich bzw. aktiven Bereichen umfasst, der bzw. die dazu bestimmt sind, von der Lichtquelle beleuchtet zu werden, wobei die Lichtquelle (5) eine Lichtquelle mit einer ersten Wellenlänge oder einem ersten Wellenlängenbereich ist, wobei die aktiven Bereiche Bereiche sind, die wenigstens einen Teil dieses Lichts mit erster Wellenlänge oder erstem Wellenlängenbereich in Licht mit zweiter Wellenlänge oder zweitem Wellenlängenbereich im sichtbaren Spektrum umwandeln,
**dadurch gekennzeichnet, dass** die aktiven Bereiche eine fluoreszierende Beschichtung aufweisen, die durch einen Lack oder eine Farbe gebildet und auf einem Teil der Oberfläche des Trägerteils angeordnet ist, wodurch die aktiven Bereiche dem Trägerteil (3) eine zweite Funktion verleihen.

2. Scheinwerfer nach Anspruch 1,
**dadurch gekennzeichnet, dass** die Lichtquelle (5) eine UV-Lichtquelle oder eine Lichtquelle im blauen oder blau-grünen Spektrum ist, und die Bereiche fluoreszierende Bereiche sind.

3. Scheinwerfer nach einem der vorhergehenden Ansprüche,
**dadurch gekennzeichnet, dass** die Lichtquelle (5) eine Diode oder eine Mehrzahl von Dioden ist, die hauptsächlich UV-Strahlen emittieren.

4. Scheinwerfer nach einem der vorhergehenden Ansprüche,
**dadurch gekennzeichnet, dass** die Bereiche die Form von insbesondere bildlichen oder grafischen Mustern haben.

5. Scheinwerfer nach einem der vorhergehenden Ansprüche,
**dadurch gekennzeichnet, dass** das Trägerteil (4A) ein Lichtleiter mit einer Lichteintrittsfläche (4A') für das von der Lichtquelle übertragene Licht und einer Lichtaustrittsfläche (4A") ist.

6. Scheinwerfer nach einem der vorhergehenden Ansprüche, mit einem Reflektor (2) und optional einer Blende,
**dadurch gekennzeichnet, dass** das Trägerteil (3) mit dem Reflektor fest verbunden ist und/oder Teil der Blende des Scheinwerfers ist.

7. Scheinwerfer nach einem der vorhergehenden Ansprüche,
**dadurch gekennzeichnet, dass** die Signalgebungsvorrichtung Teil einer Beleuchtungseinheit des Scheinwerfers ist.

8. Scheinwerfer nach einem der vorhergehenden Ansprüche,
**dadurch gekennzeichnet, dass** die zweite Funktion vom Typ Standlicht ist.

9. Fahrzeug, ausgestattet mit wenigstens einem Scheinwerfer nach einem der vorhergehenden Ansprüche.
